# EUROPÄISCHE PATENTSCHRIFT

(11) **EP 1 879 006 B1**
(45) Veröffentlichungstag und Bekanntmachung des Hinweises auf die Patenterteilung: **29.02.2012**
(21) Anmeldenummer: 07106912.4
(22) Anmeldetag: 25.04.2007
(51) Int. Cl.: G01L 23/22

(54) **Druckmesseinrichtung**
Pressure gauge device
Dispositif de mesure de la pression

(30) Priorität: 13.07.2006 DE 102006032551
(43) Veröffentlichungstag der Anmeldung: 16.01.2008
(73) Patentinhaber: ROBERT BOSCH GMBH, 70442 Stuttgart (DE)
(72) Erfinder: Johnson, Andrew, 70180, Stuttgart (DE); Flik, Gottfried, 71229, Leonberg (DE); Zinober, Sven, 79194, Gundelfingen (DE)

(56) Entgegenhaltungen:
- DE-A1- 10 343 521
- FR-A1- 2 869 393
- US-A1- 2005 211 214
- US-A1- 2006 144 154

## Beschreibung

### Stand der Technik

Die Erfindung betrifft eine Druckmesseinrichtung zur Anordnung in einer Kammer einer Brennkraftmaschine. Speziell betrifft die Erfindung eine Druckmessglühkerze zur Anordnung in einer Vor-, Wirbel- oder Brennkammer einer luftverdichtenden, selbstzündenden Brennkraftmaschine.

Aus der DE 103 46 330 A1 ist eine Druckmessglühkerze für einen Dieselmotor bekannt. Die bekannte Druckmessglühkerze weist einen Kerzenkörper zum Einsetzen in einen Zylinder eines Dieselmotors auf. Außerdem weist die bekannte Druckmessglühkerze einen im Kerzenkörper angeordneten Heizstab, der brennraumseitig aus dem Kerzenkörper vorsteht, und einen Drucksensor auf, der ein dem Druck im Brennraum des Zylinders entsprechendes Signal erzeugt, wobei der Druck über den Kerzenkörper oder den Heizstab übertragen wird. Der Drucksensor der bekannten Druckmessglühkerze ist als piezoelektrischer Drucksensor ausgebildet, wobei eine Druckbelastung des Drucksensors zu einem Ladungsaufbau führt, der über eine elektronische Schaltung erfasst und ausgewertet werden kann.

Die aus der DE 103 46 330 A1 bekannte Druckmessglühkerze hat den Nachteil, dass die Ausgestaltung des bekannten Drucksensors mit hohen Kosten verbunden ist oder Alterungseffekte über die Lebensdauer der Druckmessglühkerze auftreten. Beispielsweise ist es denkbar, dass als Wandlermaterial für den piezoelektrischen Drucksensor Quarz eingesetzt wird, das den Nachteil einer kleinen Empfindlichkeit hat, so dass zwei oder mehr ladungsmäßig parallel geschaltete Sensorelemente verwendet werden, was einen hohen Aufwand bei der Aufbau- und Verbindungstechnik erfordert. Ein weiterer Nachteil von Quarz als Wandlermaterial ist die Eigenschaft der Zwillingsbildung bei Temperaturen von über 200° C, die zu einem Alterungseffekt des Wandlermaterials führt. Andererseits ist es denkbar, dass als Wandlermaterial eine piezoelektrische Keramik zum Einsatz kommt, die jedoch auf Grund von Depolarisation den Nachteil einer Änderung der Empfindlichkeit über die Lebensdauer der Druckmessglühkerze mit sich bringt. Ferner weisen piezoelektrische Keramiken eine relativ ausgeprägte Hysterese in der Ladungs-Kraft-Kennlinie auf, die durch die Depolarisation verstärkt wird und somit zu Messproblemen führt. Bei hohen Temperaturen, insbesondere bei Temperaturen, die die Curie-Temperatur um 50 % übersteigen, werden diese nachteiligen Effekte begünstigt, so dass der Einsatzbereich von piezoelektrischen Keramiken für Druckmessglühkerzen begrenzt ist.

Eine Druckmessglühkerze mit einem Kraftübertragungselement und einem Drucksensor, wobei das Kraftübertragungselement teilweise aus dem Gehäuse ragt und der Drucksensor innerhalb des Gehäuses angeordnet ist, ist aus FR 2869393 A1 bekannt. Der Drucksensor ist dabei als scheibenförmiges, piezokeramisches Element ausgeführt.

Aus US 2006/0144154 A1 ist ein piezoelektrischer Drucksensor bekannt mit einer auf einem Substrat aufgebrachten piezoelektrischen Dünnschicht.

### Offenbarung der Erfindung

Die erfindungsgemäße Druckmesseinrichtung, bei welcher der Drucksensor ein Substrat, das als ein teilweise hoch dotierter Halbleiter ausgebildet ist und eine in den Halbleiter des Substrats eingebrachte integrierte Schaltung aufweist, hat den Vorteil, dass eine hohe Zuverlässigkeit der Druckmessung über die Lebensdauer der Druckmesseinrichtung ermöglicht ist und insbesondere relativ konstant bleibende Eigenschaften des Drucksensors gewährleistet sind. Eine solche integrierte Schaltung kann insbesondere als anwendungsspezifische integrierte Schaltung ausgestaltet sein und zum Umsetzen einer an dem Drucksensor abgreifbaren Messladung in ein elektrisches Ausgangssignal dienen, wobei eine geeignete Signalverarbeitung, insbesondere eine Signalkodierung, möglich ist.

Durch die in den Unteransprüchen aufgeführten Maßnahmen sind vorteilhafte Weiterbildungen der im Anspruch 1 angegebenen Druckmesseinrichtung möglich.

Beispielsweise können beim Substrat ein oder mehrere Bereiche auch niedrig dotiert sein. Ferner kann die elektrische Kontaktierung der Dünnschicht auf der Seite des Substrats auch mittels einer Elektrodenunterschicht erfolgen, auf die die Dünnschicht aufgebracht ist. Die Elektrodenunterschicht ist vorzugsweise aus Platin ausgebildet, um ein vorteilhaftes Wachstum zu erzielen. Speziell beim Einsatz einer elektrisch leitenden Elektrodenunterschicht kann das Substrat auch elektrisch isolierend ausgebildet sein oder aus einem Material mit relativ hohem Widerstand bestehen.

Die piezoelektrische Dünnschicht oder mehrere solche piezoelektrische Dünnschichten können eine beziehungsweise mehrere Teilschichten eines Beschichtungsstapels sein, der auf das Substrat aufgebracht ist. Dabei kann die Dünnschicht unmittelbar auf das Substrat aufgebracht sein. Ferner kann eine auf die Dünnschicht aufgebrachte Elektrodenoberschicht vorgesehen sein, die zum elektrischen Kontaktieren der Dünnschicht dient. Die elektrische Kontaktierung der Dünnschicht kann aber je nach Ausgestaltung der Dünnschicht auch direkt an der Dünnschicht erfolgen.

Vorzugsweise umfasst die Dünnschicht zumindest ein piezoelektrisches Metallnitrid und/oder ein piezoelektrisches Metalloxid. Der Einsatz einer piezoelektrischen Dünnschicht zur Erzeugung einer Messladung hat den Vorteil, dass die Alterungsproblematik von Piezokeramiken oder von Quarz vermieden werden kann. Ferner besteht der Vorteil, dass eine zumindest im Wesentlichen lineare Ladungs-Kraft-Kennlinie ohne Hysterese erhalten wird, die eine Messung des Druckes mit hoher Genauigkeit ermöglicht. Speziell bei einer Dünnschicht aus einem piezoelektrischen Metallnitrid, insbesondere Aluminiumnitrid, mit hoher Curie-Temperatur ergibt sich eine hohe Temperaturbeständigkeit, beispielsweise bis zu einer Obergrenze aus dem Bereich von etwa 500° C bis 600° C, so dass die chemischen und physikalischen Eigenschaften der Dünnschicht erhalten bleiben und eine zuverlässige Messung des Druckes auch bei einer hohen Temperaturbelastung der Druckmesseinrichtung möglich ist.

Außerdem können bei der Herstellung des Drucksensors übliche Methoden zur Herstellung von Dünnschichten, insbesondere übliche Beschichtungsprozesse wie CVD-Verfahren oder Sputtern, eingesetzt werden, so dass eine kostengünstige Herstellung des Drucksensors mit hohen Stückzahlen möglich ist. Dabei können auch Freiformflächen ohne Mehrkosten durch den Maskenprozess bei der Strukturierung realisiert werden und bei der Beschichtung auf gewöhnliche Halbleitersubstrate, beispielsweise Silizium- oder Galliumnitrid, ist durch eine Mikrostrukturierung mit Standardhalbleiterprozessen auch eine kostengünstige Ausgestaltung einer integrierten Schaltung möglich. Außerdem kann eine hohe Kantenqualität hinsichtlich Ausbrüchen erreicht werden, wobei im Fall von Halbleitersubstraten eine hohe mechanische Stabilität erreicht ist. Die Dünnschicht kann auch zumindest im Wesentlichen, das heißt abgesehen von Verunreinigungen, aus einem piezoelektrischen Metallnitrid, speziell Aluminiumnitrid, oder zumindest im Wesentlichen aus einem piezoelektrischen Metalloxid, insbesondere Zinkoxid, bestehen.

Vorteilhaft ist es, dass eine C-Achse der Kristallstruktur der Dünnschicht zumindest im Wesentlichen parallel zu einer Richtung einer Krafteinleitung von dem Kraftübertragungselement auf den Drucksensor orientiert ist. Dadurch wird eine geringe Querempfindlichkeit in Bezug auf Scherkräfte durch die in C-Achsenorientierung gewachsene Dünnschicht erreicht.

Es können auch mehrere ladungsgemäß parallel geschaltete piezoelektrische Dünnschichten vorgesehen sein, die Teil des Drucksensors sind.

Vorteilhaft ist es, dass die Dünnschicht Quarz, Langasite oder LiBNO₃ aufweist. Ferner ist es vorteilhaft, dass der Drucksensor durch mikrotechnische Ätzverfahren in beliebiger Form, vorzugsweise in Form eines Ringes oder einer Scheibe, in hohem Nutzen (Batch-Verfahren) herstellbar ist.

### Kurze Beschreibung der Zeichnungen

Bevorzugte Ausführungsbeispiele sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein erstes Ausführungsbeispiel einer erfindungsgemäßen Druckmesseinrichtung in einer schematischen Schnittdarstellung;
Fig. 2 den in Fig. 1 dargestellten Drucksensor der erfindungsgemäßen Druckmesseinrichtung in einer detaillierten Schnittdarstellung;
Fig. 3 den in Fig. 2 dargestellten Drucksensor entlang der mit III bezeichneten Schnittlinie;
Fig. 4 eine der Fig. 2 entsprechenden Darstellung eines Drucksensors einer Druckmesseinrichtung gemäß einem zweiten Ausführungsbeispiel der Erfindung;
Fig. 5 eine der Fig. 4 entsprechenden Darstellung eines Drucksensors einer Druckmesseinrichtung gemäß einem dritten Ausführungsbeispiel der Erfindung und
Fig. 6 den in Fig. 5 dargestellten Drucksensor des dritten Ausführungsbeispiels der Erfindung in einer Schnittdarstellung entlang der mit VI bezeichneten Schnittlinie.

### Ausführungsformen der Erfindung

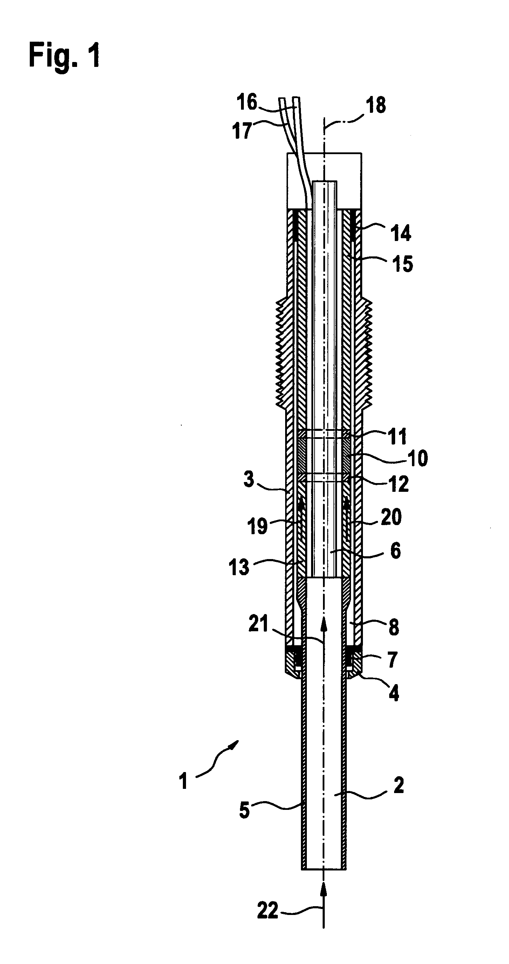

Fig. 1 zeigt ein erstes Ausführungsbeispiel einer Druckmesseinrichtung 1 in einer axialen Schnittdarstellung. Die Druckmesseinrichtung 1 ist dabei als Druckmessglühkerze 1 für eine luftverdichtende, selbstzündende Brennkraftmaschine ausgestaltet. Ein Kraftübertragungselement 2 der Druckmesseinrichtung 1, das in diesem Fall durch ein stabförmiges Heizelement 2 der Druckmessglühkerze 1 gebildet ist, ragt bei Vor- und Wirbelkammermotoren in die Kammer der Brennkraftmaschine und bei Motoren mit Direkteinspritzung in eine Brennkammer des Motors. Die erfindungsgemäße Druckmessglühkerze 1 eignet sich jedoch auch für andere Anwendungsfälle.

Ferner kann die Druckmesseinrichtung 1 auch als Brennraumdrucksensor oder Druckmesszündkerze ausgestaltet sein. Der Einsatz der erfindungsgemäßen Druckmesseinrichtung 1 bezieht sich daher allgemein auf Brennraumdrucksensoren, auf in Glühstiftkerzen integrierte Brennraumdrucksensoren, auf in Zündkerzen integrierte Brennraumdrucksensoren, auf Drucksensorik und auf Kraftsensorik im Allgemeinen.

Die Druckmessglühkerze 1 weist ein Gehäuse 3 auf, an dem ein Dichtkonus 4 ausgebildet ist. Das stabförmige Heizelement 2 weist eine Kraftübertragungshülle 5 auf, die beispielsweise durch ein Metallrohr gebildet sein kann. Die elektrische Kontaktierung des stabförmigen Heizelements 2 erfolgt einerseits über eine Glühstromleitung 6 und andererseits über eine geeignete Verbindung mit dem Gehäuse 3, wobei über das Gehäuse 3 eine Verbindung mit Masse herstellbar ist.

Innerhalb des Gehäuses 3 ist ein in diesem Ausführungsbeispiel als Metallmembran 7 ausgestaltetes Dichtelement 7 vorgesehen, um einen Innenraum 8 des Gehäuses 3 gegenüber der Kammer der Brennkraftmaschine abzudichten. Das Dichtelement 7 kann auch als O-Ring oder als Graphitbuchse ausgestaltet sein.

In dem Innenraum 8 ist ein Drucksensor 10 zwischen einem ersten Kontaktelement 11 und einem zweiten Kontaktelement 12 angeordnet. Über das zweite Kontaktelement 12 und eine Kraftübertragungshülse 13 steht der Drucksensor 10 mit dem Kraftübertragungselement 2 in Wirkverbindung. Ferner stützt sich der Drucksensor 10 über das erste Kontaktelement 11 an einem mit dem Gehäuse 3 an einer Verbindungsstelle 14 verbundenen Fixierelement 15 ab. Dabei können gegebenenfalls eine oder mehrere Isolierschichten vorgesehen sein, um eine elektrische Isolierung zwischen dem ersten Kontaktelement 11 und dem Fixierelement 15 beziehungsweise dem zweiten Kontaktelement 12 und der Kraftübertragungshülse 13 zu erreichen. Der Drucksensor 10 ist in diesem Ausführungsbeispiel zylinderringförmig ausgebildet, so dass sich die Glühstromleitung 6 durch den Drucksensor 10 hindurchführen lässt. Entsprechend sind auch die Kontaktelemente 11, 12 ringförmig ausgestaltet. Außerdem sind Messleitungen 16, 17 vorgesehen, die mit den Kontaktelementen 11, 12 verbunden sind, um ein elektrisches Messsignal aus der Druckmesseinrichtung 1 zu einer geeigneten Auswerteeinrichtung zu führen.

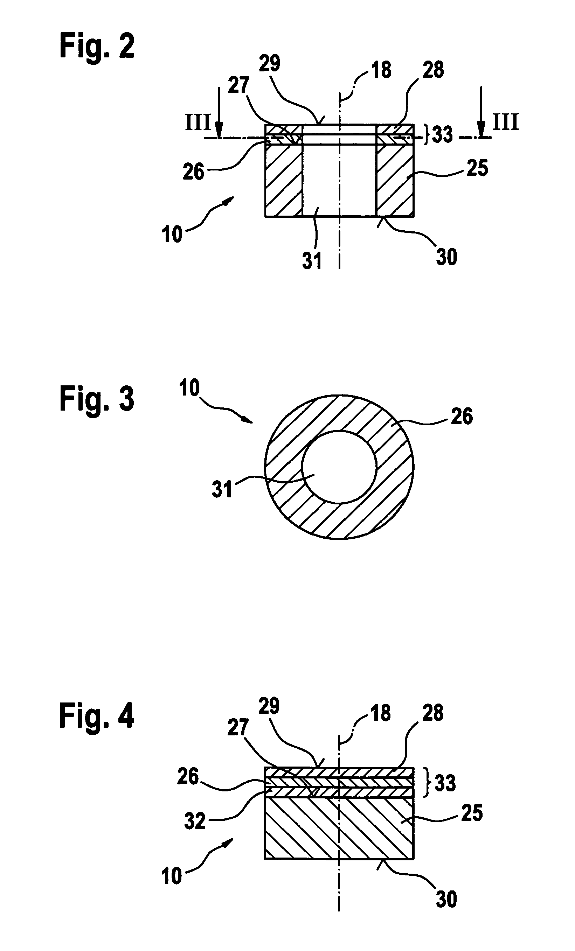

Das Kraftübertragungselement 2, die Kraftübertragungshülse 13, die Kontaktelemente 11, 12, der Drucksensor 10 und das Fixierelement 15 sind koaxial zu einer Achse 18 des Gehäuses 3 der Druckmesseinrichtung 1 angeordnet, so dass eine durch die Pfeile 19, 20, 21 veranschaulichte Krafteinleitung von dem Kraftübertragungselement 2 auf den Drucksensor 10 in Richtung der Achse 18 erfolgt. In Abhängigkeit von dem momentanen Druck in der Kammer der Brennkraftmaschine wirkt eine Kraft 22 in Richtung der Achse 18 auf das Kraftübertragungselement 2, die sich in einer entsprechenden Beaufschlagung des Drucksensors 10 auswirkt. Am Drucksensor 10 ergibt sich deshalb eine entsprechende Messladung, die über die Messleitungen 16, 17 abgegriffen werden kann. Die Messleitungen 16, 17 können dabei, wie in der Fig. 1 dargestellt, teilweise innerhalb der Kontaktelemente 11, 12 und des Drucksensors 10 verlaufen oder auch von außen an die Kontaktelemente 11, 12 beziehungsweise direkt an den Drucksensor 10 geführt sein. Die Ausgestaltung und die Wirkungsweise des Drucksensors 10 der Druckmesseinrichtung 1 ist im Folgenden anhand der Fig. 2 im Detail weiter erläutert.

Fig. 2 zeigt den Drucksensor 10 der Druckmesseinrichtung 1 des ersten Ausführungsbeispiels in einer detaillierten Schnittdarstellung. Der Drucksensor 10 weist ein Substrat 25 auf, das aus einem Halbleitermaterial, beispielsweise aus hoch dotiertem n- oder p-Si, ausgebildet ist. Auf das Substrat 25 ist eine piezoelektrische Dünnschicht 26 aufgebracht. Dabei ist eine Wachstumsrichtung bei der Herstellung der Dünnschicht 26 parallel zur Achse 18 orientiert, so dass die Orientierung der C-Achse der Kristallstruktur der Dünnschicht 26 parallel zur Achse 18 ist. Dadurch wird eine vorteilhafte Empfindlichkeit der Dünnschicht 26 in Bezug auf die in der Fig. 1 mittels der Pfeile 19, 20, 21 dargestellte Krafteinleitung erreicht, die im Wesentlichen unempfindlich gegenüber Quer- beziehungsweise Scherkräften ist.

Die Dünnschicht 26 ist unmittelbar auf eine Stirnfläche 27 des Substrats 25 aufgebracht. Ferner ist auf die Dünnschicht 26 eine Elektrodenoberschicht 28 aufgebracht, die zur Kontaktierung der Dünnschicht 26 dient. Das in der Fig. 1 dargestellte erste Kontaktelement 11, das beispielsweise als Metallring ausgestaltet ist, liegt dann an einer Oberseite 29 der Elektrodenoberschicht 28 an. Dabei gleicht die Elektrodenoberschicht 28 eventuelle Unebenheiten des ersten Kontaktelements 11 aus. Das heißt, die Elektrodenoberschicht 28 sorgt für eine Äquipotentialfläche und verhindert dadurch Parasitärkapazitäten, die durch Hohlräume zwischen der Elektrodenoberschicht 28 und dem Kontaktelement 11 entstehen können. Allerdings kann bei einer sehr ebenen, glatten Ausgestaltung des ersten Kontaktelements 11 auf der Seite der Dünnschicht 26 auf Grund der durch Dünnschichtprozesse, wie zum Beispiel CVD-Verfahren oder Sputtern, relativ leicht erzielbaren hohen Oberflächenqualität der Dünnschicht 26, insbesondere einer geringen Rauhigkeit der Dünnschicht 26, auch eine direkte Kontaktierung der Dünnschicht 26 über das erste Kontaktelement 11 erfolgen, wobei die Elektrodenoberschicht 28 entfällt.

Bei dem in der Fig. 2 dargestellten Ausführungsbeispiel ist das Substrat 25 elektrisch leitend ausgestaltet, so dass über das zweite Kontaktelement 12, das an einer Stirnfläche 30 des Substrats 25 anliegt, eine Verbindung mit einer der Messleitungen 16, 17 erfolgen kann. Eine alternative Kontaktierung, die insbesondere bei einem elektrisch isolierenden oder hochohmigen Substrat 25 zum Einsatz kommen kann, ist unten anhand der Fig. 4 beschrieben.

Die Elektrodenoberschicht 28 ist vorzugsweise als metallische Elektrodenoberschicht 28 ausgestaltet. Vorzugsweise ist die Elektrodenoberschicht 28 zumindest im Wesentlichen aus CrAu oder CrNiAu oder dergleichen gebildet, die eine hohe Temperaturbeständigkeit aufweisen. Weitere mögliche Metalle zur Ausgestaltung der Elektrodenoberschicht 28 sind Aluminium und Platin.

Der gesamte Drucksensor 10 weist eine durchgehende Öffnung 31 auf, so dass die Glühstromleitung 6 und die Messleitungen 16, 17 durch beziehungsweise in die Öffnung 31 geführt werden können.

Fig. 3 zeigt den Drucksensor 10 der Druckmesseinrichtung 1 des ersten Ausführungsbeispiels in einer Schnittdarstellung entlang der in Fig. 2 mit III bezeichneten Schnittlinie. Die Geometrie der Dünnschicht 26 ist im Wesentlichen durch die Stirnfläche 27 vorgegeben, so dass sich in diesem Ausführungsbeispiel eine näherungsweise kreisringförmige Dünnschicht 26 ergibt.

Fig. 4 zeigt einen Drucksensor 10 einer Druckmesseinrichtung 1 gemäß einem zweiten Ausführungsbeispiel der Erfindung in einer der Fig. 2 entsprechenden Schnittdarstellung. In diesem Ausführungsbeispiel weist der Drucksensor 10 im Unterschied zu dem in Fig. 2 dargestellten Drucksensor 10 keine Öffnung 31 auf. Dadurch kann bei entsprechenden Abmessungen eine größere Messladung erzeugt werden. Ferner ist eine Elektrodenunterschicht 32 vorgesehen, die unmittelbar auf das Substrat 25 aufgebracht ist. Auf die Elektrodenunterschicht 32 ist dann zunächst die Dünnschicht 26 und dann die Elektrodenoberschicht 28 aufgebracht. Dadurch ergibt sich ein aus den Schichten 32, 26, 28 bestehender Beschichtungsstapel 33. In Abhängigkeit von dem Material des Substrats 25 kann durch die Elektrodenunterschicht 32 der elektrische Kontakt zwischen der Dünnschicht 26 und dem Substrat 25, insbesondere die Haftung zwischen der Dünnschicht 26 und dem Substrat 25, verbessert werden. Ferner kann die Elektrodenunterschicht 32 auch zum elektrischen Verbinden mit einer der Messleitungen 16, 17 dienen. Mögliche Ausgestaltungen, insbesondere chemische Zusammensetzungen, der Elektrodenunterschicht 32 entsprechen denen der Elektrodenoberschicht 28, wobei die Elektrodenoberschicht 28 und die Elektrodenunterschicht 32 eines Drucksensors 10 die gleiche oder auch voneinander verschiedene Zusammensetzungen haben können.

Es ist anzumerken, dass die Elektrodenunterschicht 32 auch entfallen kann. Ferner kann der Drucksensor 10 einen kreisförmigen oder einen rechteckigen, insbesondere einen quadratischen, Querschnitt aufweisen.

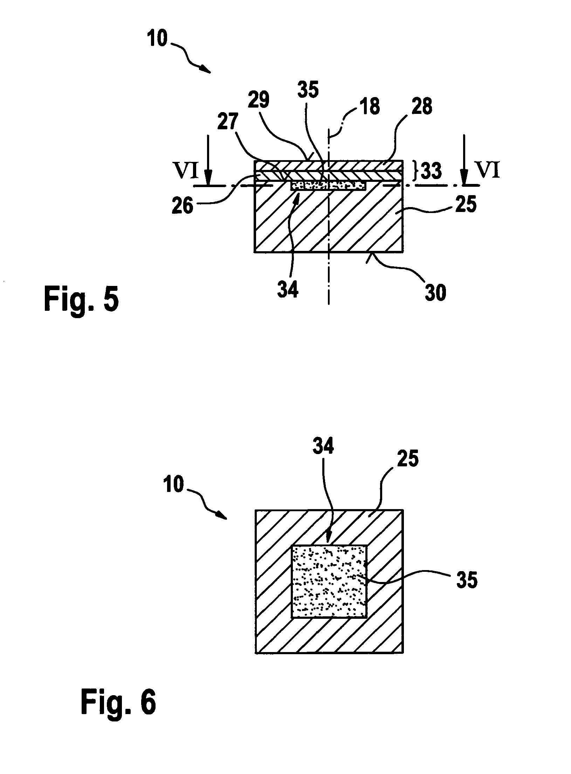

Fig. 5 zeigt einen Drucksensor 10 einer Druckmesseinrichtung 1 gemäß einem dritten Ausführungsbeispiel in einer der Fig. 4 entsprechenden Schnittdarstellung. In diesem Ausführungsbeispiel ist das Substrat 25 aus einem Halbleiter gebildet. Dabei ist einem Bereich 34 des Halbleitermaterials des Substrats 25 eine integrierte Schaltung 35, insbesondere eine anwendungsspezifische integrierte Schaltung 35, ausgebildet. Die integrierte Schaltung 35 ist so mit der Dünnschicht 26 verbunden, dass eine zumindest teilweise Auswertung der erzeugten Messladung erfolgen kann. Insbesondere kann die integrierte Schaltung 35 die erzeugte Messladung in ein Messsignal, zum Beispiel in eine Messsignalspannung, umsetzen, um ein fehlerfreies Auslesen der gemessenen Messladung über die Messleitungen 16, 17 zu ermöglichen. Die Verbindung der Dünnschicht 26 mit der integrierten Schaltung 35 kann dabei auch mittels einer Elektrodenunterschicht 32 erfolgen, die in der Fig. 4 dargestellt ist.

Fig. 6 zeigt den in Fig. 5 dargestellten Drucksensor 10 der Druckmesseinrichtung 1 des dritten Ausführungsbeispiels entlang der mit VI bezeichneten Schnittlinie. In diesem Ausführungsbeispiel weist das Substrat 25 einen quadratischen Querschnitt auf. Die integrierte Schaltung 35 ist im Inneren des Drucksensors 10 ausgebildet, so dass diese gegenüber der Umgebung geschützt ist.

Die piezoelektrische Dünnschicht 26 ist vorzugsweise aus einem piezoelektrischen Metallnitrid, insbesondere aus Aluminiumnitrid, oder einem piezoelektrischen Metalloxid, insbesondere Zinkoxid, ausgestaltet. Die piezoelektrische Dünnschicht 26 kann auch aus einem Quarz, aus Langasite, das heißt La₃Ga₅SiO₁₄, oder aus LiBNO₃ gebildet sein. Vorzugsweise hat die piezoelektrische Dünnschicht eine hohe Empfindlichkeit von beispielsweise bis zu etwa 5 pC/N und einen geringen Temperaturgang. Die Dünnschicht 26 kann auf verschiedenen Substraten 25 ausgestaltet sein, die beispielsweise aus Si, Al₂O₃ oder Stahl gebildet sein können. Dabei können hohe Empfindlichkeiten erreicht werden, die beispielsweise etwa doppelt so groß wie die von Quarz sind.

Die Erfindung ist nicht auf die beschriebenen Ausführungsbeispiele beschränkt.

## Patentansprüche

1. Druckmesseinrichtung (1) zur Anordnung in einer Kammer einer Brennkraftmaschine, insbesondere Druckmessglühkerze für eine luftverdichtende, selbstzündende Brennkraftmaschine, mit einem Gehäuse (3), einem Kraftübertragungselement (2), das teilweise aus dem Gehäuse (3) ragt, und mit zumindest einem Drucksensor (10), der in einem Innenraum (8) des Gehäuses (3) angeordnet ist, wobei der Drucksensor (10) einerseits zumindest mittelbar mit dem Kraftübertragungselement (2) in Wirkverbindung steht, wobei der Drucksensor (10) andererseits zumindest mittelbar an einem Fixierelement (15) abgestützt ist, und wobei der Drucksensor (10) ein Substrat (25) und zumindest eine auf das Substrat (25) aufgebrachte piezoelektrische Dünnschicht (26) aufweist, **dadurch gekennzeichnet, dass** das Substrat (25) aus einem zumindest teilweise hoch dotierten Halbleiter gebildet ist, und dass der Drucksensor (10) eine in dem Halbleiter des Substrats (25) ausgebildete integrierte Schaltung (35) zum Umsetzen einer an dem Drucksensor (10) abgreifbaren Messladung in ein elektrisches Messsignal aufweist.

2. Druckmesseinrichtung nach Anspruch 1,
**dadurch gekennzeichnet, dass** die Dünnschicht (26) unmittelbar auf das Substrat (25) aufgebracht ist.

3. Druckmesseinrichtung nach Anspruch 1 oder 2,
**dadurch gekennzeichnet, dass** eine auf die Dünnschicht (26) aufgebrachte Elektrodenoberschicht (28) vorgesehen ist, die zum elektrischen Kontaktieren der Dünnschicht (26) dient.

4. Druckmesseinrichtung nach einem der Ansprüche 1 bis 3,
**dadurch gekennzeichnet, dass** die Dünnschicht (26) zumindest ein piezoelektrisches Metallnitrid, insbesondere ein Aluminiumnitrid, aufweist.

5. Druckmesseinrichtung nach einem der Ansprüche 1 bis 4, **dadurch gekennzeichnet, dass** die Dünnschicht (26) zumindest ein piezoelektrisches Metalloxid, insbesondere ein Zinkoxid, aufweist.

6. Druckmesseinrichtung nach Anspruch 5,
**dadurch gekennzeichnet, dass** eine C-Achse der Kristallstruktur der Dünnschicht (26) zumindest im Wesentlichen parallel zu einer Richtung (20) einer Krafteinleitung von dem Kraftübertragungselement (2) auf den Drucksensor (10) orientiert ist.

7. Druckmesseinrichtung nach einem der Ansprüche 1 bis 4, **dadurch gekennzeichnet, dass** die Dünnschicht (26) Quarz, Langasite oder LiBNO₃ aufweist.

8. Druckmesseinrichtung nach einem der Ansprüche 1 bis 7, **dadurch gekennzeichnet, dass** der Drucksensor (10) durch ein mikrotechnisches Ätzverfahren, vorzugsweise in Form eines Ringes oder einer Scheibe, hergestellt ist.

## Claims

1. Pressure-measuring device (1) for arrangement in a chamber of an internal combustion engine, in particular a pressure-measuring glow plug for an air-compressing internal combustion engine with self-ignition, comprising a housing (3), a force transmission element (2), which protrudes partially from the housing (3), and comprising at least one pressure sensor (10), which is arranged in an interior space (8) of the housing (3), wherein the pressure sensor (10) is operatively connected on the one hand at least indirectly to the force transmission element (2), wherein the pressure sensor (10) is supported on the other hand at least indirectly on a fixing element (15), and wherein the pressure sensor (10) has a substrate (25) and at least one piezoelectric thin layer (26) applied to the substrate (25), **characterized in that** the substrate (25) is formed from an at least partially highly doped semiconductor, and **in that** the pressure sensor (10) has an integrated circuit (35), which is formed in the semiconductor of the substrate (25), for converting a measurement charge which can be tapped off at the pressure sensor (10) into an electrical measurement signal.

2. Pressure-measuring device according to Claim 1, **characterized in that** the thin layer (26) is applied directly to the substrate (25).

3. Pressure-measuring device according to Claim 1 or 2,
**characterized in that** an upper electrode layer (28) applied to the thin layer (26) is provided and serves for making electrical contact with the thin layer (26).

4. Pressure-measuring device according to one of Claims 1 to 3,
**characterized in that** the thin layer (26) comprises at least one piezoelectric metal nitride, in particular an aluminium nitride.

5. Pressure-measuring device according to one of Claims 1 to 4,
**characterized in that** the thin layer (26) comprises at least one piezoelectric metal oxide, in particular a zinc oxide.

6. Pressure-measuring device according to Claim 5, **characterized in that** a C axis of the crystal structure of the thin layer (26) is oriented at least substantially parallel to a direction (20) of the introduction of force from the force transmission element (2) to the pressure sensor (10).

7. Pressure-measuring device according to one of Claims 1 to 4,
**characterized in that** the thin layer (26) comprises quartz, langasites or LiBNO₃.

8. Pressure-measuring device according to one of Claims 1 to 7,
**characterized in that** the pressure sensor (10) is produced by a microtechnical etching process, preferably in the form of a ring or a disc.

## Revendications

1. Dispositif de mesure de la pression (1) à disposer dans un compartiment d'un moteur à combustion interne, notamment bougie d'allumage de mesure de pression pour un moteur à combustion interne à allumage automatique étanchéifié à l'air, avec un carter (3), un élément de transmission de force (2) saillant en partie hors du carter (3) et avec au moins un capteur de pression (10) disposé dans un espace intérieur (8) du carter (3), le capteur de pression (10) étant en liaison active d'une part au moins indirectement avec l'élément de transmission de force (2), le capteur de pression (10) s'appuyant d'autre part au moins indirectement contre l'élément de fixation (15) et le capteur de pression (10) comportant un substrat (25) et au moins une couche mince (26) piézoélectrique appliquée sur le substrat (25), **caractérisé en ce que** le substrat (25) est constitué à partir d'un semi-conducteur au moins en partie fortement doté et que le capteur de pression (10) comprend un circuit intégré (35) réalisé dans le semi-conducteur du substrat (25) pour transformer une charge de mesure pouvant être détectée au niveau du capteur de pression (10) en un signal de mesure électrique.

2. Dispositif de mesure de la pression selon la revendication 1, **caractérisé en ce que** la couche mince (26) est directement appliquée sur le substrat (25).

3. Dispositif de mesure de la pression selon la revendication 1 ou 2, **caractérisé en ce qu'**une couche supérieure d'électrode (28) appliquée sur la couche mince (26) est prévue et sert à la mise en contact électrique de la couche mince (26).

4. Dispositif de mesure de la pression selon l'une quelconque des revendications 1 à 3, **caractérisé en ce que** la couche mince (26) comprend au moins un nitrure de métal piézoélectrique, notamment un nitrure d'aluminium.

5. Dispositif de mesure de la pression selon l'une quelconque des revendications 1 à 4, **caractérisé en ce que** la couche mince (26) comprend au moins un oxyde métallique piézoélectrique, notamment un oxyde de zinc.

6. Dispositif de mesure de la pression selon la revendication 5, **caractérisé en ce qu'**un axe C de la structure cristalline de la couche mince (26) est orienté au moins pour l'essentiel parallèlement à une direction (20) d'introduction de force provenant de l'élément de transmission de force (2) sur le capteur de pression (10).

7. Dispositif de mesure de la pression selon l'une quelconque des revendications 1 à 4, **caractérisé en ce que** la couche mince (26) comprend du quartz, du langasite ou du LiBNO₃.

8. Dispositif de mesure de la pression selon l'une quelconque des revendications 1 à 7, **caractérisé en ce que** le capteur de pression (10) est fabriqué par le biais d'un procédé de décapage microtechnique, de préférence sous la forme d'une bague ou d'un disque.
